# EUROPEAN PATENT APPLICATION

(11) **EP 2 679 556 A1**
(43) Date of publication of application: **01.01.2014**
(21) Application number: 13173697.7
(22) Date of filing: 26.06.2013
(51) Int. Cl.: C03C 17/34

(54) **Method of manufacturing thermochromic window**

(30) Priority: 27.06.2012 KR 20120069382
(71) Applicant: Samsung Corning Precision Materials Co., Ltd., Gyeongsangbuk-do Gumi-si, 730-735 (KR)
(72) Inventor: Choi, YongWon, 336-841 Asan-si (KR); Jung, Youngsoo, 336-841 Asan-si (KR); RYU, SangRyoun, 336-841 Asan-si (KR); Jung, Yung-Jin, 336-841 Asan-si (KR)
(74) Representative: Gulde Hengelhaupt Ziebig & Schneider

(57) **Abstract**

A method of manufacturing a thermochromic window, with which the thermochromic window can have increased visible light transmittance while maintaining the thermochromic characteristics thereof. The method includes the steps of forming a first transparent conductive film on a substrate, forming a pre-thermochromic thin film on the first transparent conductive film, and heat-treating a multilayer structure that includes the substrate, the first transparent conductive film and the pre-thermochromic thin film, thereby reforming the pre-thermochromic thin film into a thermochromic thin film.

## Description

### CROSS REFERENCE TO RELATED APPLICATION

The present application claims priority from Korean Patent Application Number 10-2012-0069382 filed on June 27, 2012, the entire contents of which application are incorporated herein for all purposes by this reference.

### BACKGROUND OF THE INVENTION

### Field of the Invention

The present invention relates to a method of manufacturing a thermochromic window, and more particularly, to a method of manufacturing a thermochromic window, the sunlight transmittance of which varies depending on temperature.

### Description of Related Art

In response to the soaring prices of chemical energy sources such as petroleum, the necessity for the development of new energy sources is increasing. In addition, the importance of energy saving technologies is also increasing with this demand for new energy sources. In fact, at least 60% of energy consumption in households is attributed to heating and/or cooling. In particular, both households and buildings lose up to 24% of their energy through windows.

Accordingly, a variety of attempts have been made in order to reduce the amount of energy that is lost through windows by increasing the airtightness and insulation characteristics thereof while maintaining the basic functions of windows, i.e. the aesthetics and the characteristics of view. Representative methods, by way of example, include varying the size of the windows and furnishing high-insulation windows.

Types of high insulation window glass include an argon (Ar) injected pair-glass, in which Ar gas or the like is disposed between a pair of glass panes in order to prevent heat exchange, a low-e glass, and the like. Also being studied is a type of glass that is coated with a layer that has specific thermal characteristics in order to adjust the amount of solar energy that is introduced.

In particular, the surface of the low-e glass is coated with a thin layer of metal or metal oxide, which allows the most visible light that is incident on the window to enter, so that the interior of a room can be kept bright, while radiation in the infrared (IR) range can be blocked. The effects of this glass are that it prevents heat escaping to the outside, and also prevents heat energy outside a building from entering, thereby reducing cooling and heating bills. However, this window has the following drawbacks due to its characteristics in reflecting wavelengths other than visible light. Specifically, it does not admit the IR range of sunlight into the interior of a room, which is a drawback, especially in winter, and the sunlight transmittance thereof is not adjusted according to the season and/or temperature.

Accordingly, the development of technologies for thermochromic windows which are provided by coating a glass with a thermochromic material is underway. Such a thermochromic window blocks near infrared (NIR) radiation and infrared (IR) radiation while allowing visible light to pass through when the glass arrives at a predetermined temperature or higher, thereby preventing the room temperature from rising.

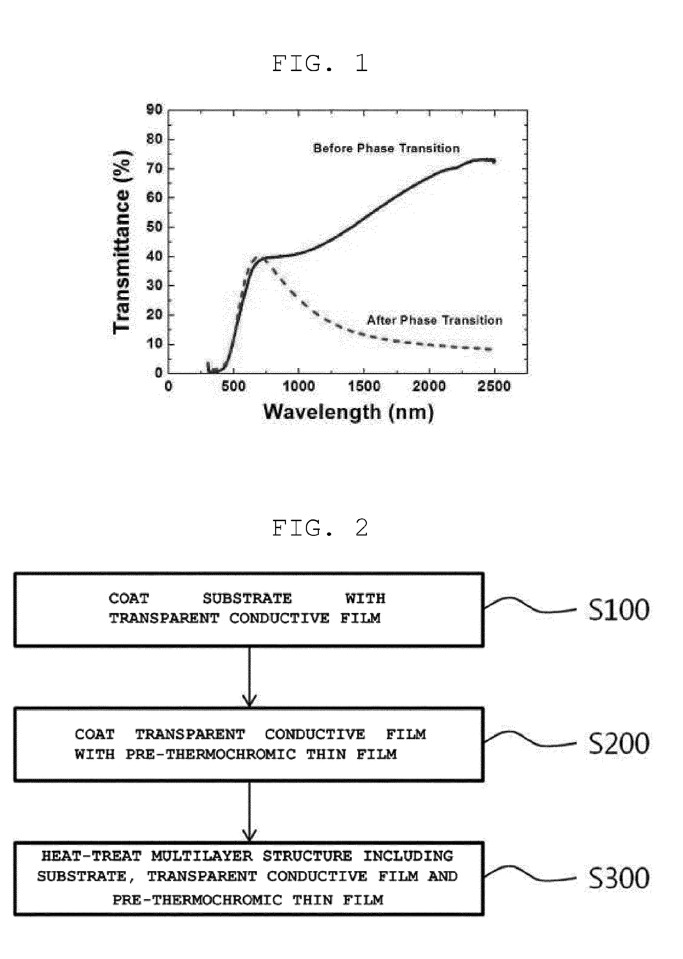

FIG. 1 is a graph showing variations in the level of sunlight transmittance of a thermochromic window before and after the phase transition, in which the surface of a glass substrate is coated with a thermochromic thin film made of vanadium dioxide (VO₂).

As shown in FIG. 1, it can be appreciated that, when the glass is coated with the thermochromic material, the transmittance of the glass for solar light, in particular, in an IR range differs before and after phase transition. This can consequently improve energy efficiency when cooling and heating a building.

When such a thermochromic thin film is applied to an architectural glass, low emissivity is required in order to minimize heat loss when warming is conducted in winter. However, the traditional thermochromic thin film does not have low emissivity, which is problematic. In particular, a vanadium dioxide (VO₂) thin film has a problem in that it cannot effectively insulate heat when warming is conducted in winter since it has a high emissivity of 0.84, which is similar to that of typical glass.

In addition, the thermochromic thin film has a drawback of low visible light transmittance due to its metallic property.

In order to increase the visible light transmittance of the thermochromic thin film, a method of decreasing the thickness of the thermochromic thin film or a method of forming a multilayer film structure which includes a low-refractivity thin film and/or a high refractivity thin film in addition to the thermochromic thin film is used in the related art.

However, when the thickness of the thermochromic thin film is decreased, there occurs a problem in that the phase transition characteristic of the thermochromic thin film becomes nonuniform. In addition, when the low-refractivity thin film and/or the high refractivity thin film in addition to the thermochromic thin film are formed into the multilayer film structure, there occurs a problem in that the thermochromic material undergoes phase change into a different crystalline phase, thereby losing its thermochromic characteristics, while the high-temperature deposition process for forming the multilayer structure is being carried out.

The information disclosed in the Background of the Invention section is provided only for better understanding of the background of the invention, and should not be taken as an acknowledgment or any form of suggestion that this information forms a prior art that would already be known to a person skilled in the art.

### BRIEF SUMMARY OF THE INVENTION

Various aspects of the present invention provide a method of manufacturing a thermochromic window, with which the thermochromic window can have increased visible light transmittance while maintaining the thermochromic characteristics thereof.

In an aspect of the present invention, provided is a method of manufacturing a thermochromic window that includes the following steps of: forming a first transparent conductive film on a substrate; forming a pre-thermochromic thin film on the first transparent conductive film; and heat-treating a multilayer structure that includes the substrate, the first transparent conductive film and the pre-thermochromic thin film, thereby reforming the pre-thermochromic thin film into a thermochromic thin film.

According to an embodiment of the present invention, the method may further include the step of forming a second transparent conductive film on the pre-thermochromic thin film after forming the pre-thermochromic thin film (and before heat-treating), wherein the multilayer structure further comprises the second transparent conductive film.

Preferably, heat-treating is carried out such that the pre-thermochromic thin film is (completely) reformed into a thermochromic thin film. It should be understood that the heat-treating can be carried out at different temperatures and for a different time (duration). For example, a heat-treating with a relatively high temperature for a relatively short duration can have the same effect of reformation as a heat-treating with a low high temperature for a relatively long duration. That is, the skilled person will select the parameters of the heat-treating (temperature, duration, pressure etc.) such that the pre-thermochromic thin film is reformed into a thermochromic thin film depending on the parameters of the multilayer structure (materials, thicknesses etc.). More preferably the pre-thermochromic thin film is completely reformed, i.e. the pre-thermochromic thin film completely resolves after heat-treating.

Preferably, the method is carried out in the following sequence: first the step of forming a first transparent conductive film on a substrate, then the forming a pre-thermochromic thin film on the first transparent conductive film, then (optionally) the step of forming a second transparent conductive film on the pre-thermochromic thin film, and then the step of heat-treating a multilayer structure that includes the substrate, the first transparent conductive film and the pre-thermochromic thin film, and (optionally the second transparent conductive film). Preferably the mentioned steps are carried out directly one after another without any other intervening method steps.

The step of heat-treating the multilayer structure may cause oxygen to diffuse from the transparent conductive film into the pre-thermochromic thin film, thereby reforming the pre-thermochromic thin film into the thermochromic thin film.

The thermochromic thin film may be made of a thermochromic material AxBy, and the pre-thermochromic thin film be made of a material AxBz, where A is a metal, and y is greater than z. It is preferred that z be 0.

The step of forming the transparent conductive film may be carried out in an oxygen atmosphere. Preferably, the oxygen atmosphere comprises more than 50% (Vol%), more preferably more than 60%, more preferably more than 70%, more preferably more than 80%, more preferably more than 90% and still more preferably more than 95% oxygen.

The thermochromic thin film may be made of (preferably consists of) one selected from the group consisting of vanadium dioxide (VO₂), titanium (III) oxide (Ti₂O₃) and niobium oxide (NbO₂).

The pre-thermochromic thin film may include pure vanadium metal, wherein heat-treating the multilayer structure causes the pure vanadium metal to be phase-changed into vanadium dioxide (VO₂).

The transparent conductive film may be made of at least one material selected from the group consisting of indium (III) oxide (In₂O₃), tin dioxide (SnO₂) and zinc peroxide (ZnO₂). It is preferred that the transparent conductive film further include a dopant.

The step of heat-treating the multilayer structure may be carried out in a temperature ranging from 300 to 500 °C in a vacuum atmosphere.

The transparent conductive film may be formed via sputtering.

According to embodiments of the present invention, it is possible to manufacture a thermochromic window, with which the thermochromic window can have increased visible light transmittance while maintaining the thermochromic characteristics thereof.

Preferably, the substrate comprises a uniform thickness over at least 50% (more preferably over 90%, still more preferably over 100%) of the total surface area the substrate. Preferably, the first (and/or second) transparent conductive film is formed such to comprise a uniform thickness over at least 50% (more preferably over 90%, still more preferably over 100%) of the total surface area the transparent conductive film. Preferably, the pre-thermochromic thin film is formed such to comprise a uniform thickness over at least 50% (more preferably over 90%, still more preferably over 100%) of the total surface area the pre-thermochromic thin film. Preferably, the resulting thermochromic thin film (after heat-treatment) is formed such to comprise a uniform thickness over at least 50% (more preferably over 90%, still more preferably over 100%) of the total surface area the thermochromic thin film. Uniformity according to the present invention is understood in that a ratio of a maximum thickness and a minimum thickness (of the uniform film) preferably ranges between 1 and 1.5, more preferably between 1 and 1.2 and still more preferably between 1 and 1.001. Preferably the substrate is a soda-lime glass. Preferably, the substrate comprises a thickness of 0.6 mm or more, more preferably a thickness of 1.0 mm or more and still more preferably a thickness of 2.0 mm or more. Preferably the substrate has a surface area of greater than 1 cm², more preferably of greater than 10 cm², more preferably of greater than 100 cm² and still more preferably of greater than 1000 cm². Preferably the substrate has the shape of a rectangle. Preferably the soda-lime glass comprises a chemical composition having 70 or more wt% of SiO₂, 10 or more wt% of Na₂O, 5 or more wt% of CaO. Preferably, the soda-lime glass further comprises 2 or more wt% of MgO, 0.05 or more wt% of Al₂O₃, 0.01 or more wt% of K₂O, 0.01 or more wt% of TiO₂, and 0.05 or more wt% of Fe₂O₃.
Preferably, the surface area of the substrate which is covered by the first (and/or second) transparent conductive film, the pre-thermochromic thin film and/or the (resulting) thermochromic thin film is preferably greater than 50%, more preferably greater than 60%, more preferably greater than 70%, more preferably greater than 80% and still more preferably greater than 90%. Preferably, the surface area of the transparent conductive film which is covered by the pre-thermochromic thin film (either located above or underneath) is preferably greater than 80%, more preferably greater than 90% and still more preferably this covered surface area is 100%. Preferably, the first (and/or second) transparent conductive film is formed with a thickness of 5 nm to 500 nm, more preferably 10 nm to 400 nm, more preferably 20 nm to 300 nm, more preferably 30 nm to 250 nm, more preferably 40 nm to 200 nm and still more preferably 50 nm to 100 nm. Preferably, the pre-thermochromic thin film is formed with a thickness of 5 nm to 1000 nm, more preferably 10 nm to 800 nm, more preferably 20 nm to 700 nm, more preferably 30 nm to 500 nm, more preferably 40 nm to 300 nm and still more preferably 50 nm to 100 nm.

The methods of the present invention have other features and advantages which will be apparent from, or are set forth in greater detail in the accompanying drawings, which are incorporated herein, and in the following Detailed Description of the Invention, which together serve to explain certain principles of the present invention.

### BRIEF DESCRIPTION OF THE DRAWINGS

FIG. 1 is a graph showing variations in the level of sunlight transmittance of a thermochromic window before and after the phase transition, in which one surface of a glass substrate is coated with a thermochromic thin film made of vanadium dioxide (VO₂);

FIG. 2 is a flowchart schematically showing a method of manufacturing a thermochromic window according to a first embodiment of the present invention;

FIG. 3 is a flowchart schematically showing a method of manufacturing a thermochromic window according to a second embodiment of the present invention;

FIG. 4 is a graph showing the visible light transmittance of a thermochromic window that is manufactured according to the second embodiment of the present invention depending on the thickness; and

FIG. 5 is a graph showing the reflectance of the thermochromic window that is manufactured according to the second embodiment of the present invention.

### DETAILED DESCRIPTION OF THE INVENTION

Reference will now be made in detail to a method of manufacturing a thermochromic window according to the present invention, embodiments of which are illustrated in the accompanying drawings and described below, so that a person having ordinary skill in the art to which the present invention relates can easily put the present invention into practice.

Throughout this document, reference should be made to the drawings, in which the same reference numerals and signs are used throughout the different drawings to designate the same or similar components. In the following description of the present invention, detailed descriptions of known functions and components incorporated herein will be omitted when they may make the subject matter of the present invention unclear.

FIG. 2 is a flowchart schematically showing a method of manufacturing a thermochromic window according to a first embodiment of the present invention.

Referring to FIG. 2, in order to manufacture a thermochromic window according to the present invention, first, at S100, a substrate is coated with a transparent conductive film.

The substrate is a base material of the thermochromic window. It is preferred that the substrate be made of a soda-lime architectural glass.

The transparent conductive film is a conductive oxide film, which is formed on the substrate in order to diffuse oxygen into a pre-thermochromic thin film at the subsequent heat treatment step.

This transparent conductive film has low emissivity and a high refractive index, thereby lowering the emissivity of the thermochromic window and increasing the visible light (380 to 760 nm) transmittance of the thermochromic window. That is, the transparent conductive film can increase the emissivity of the thermochromic window due to its superior resistivity. In addition, since the transparent conductive film has high refractive index, it is possible to control the visible light transmittance by adjusting the thickness of the transparent conductive film.

In addition, the transparent conductive film acts as a diffusion barrier that prevents ions inside the substrate from diffusing into the thermochromic thin film at a heat treatment step S300 which will be described later, thereby preventing the thermochromic thin film from losing the thermochromic characteristics. In particular, when the substrate is made of a soda-lime glass, the transparent conductive film can prevent sodium (Na) ions inside the glass substrate from diffusing into the thermochromic thin film.

The transparent conductive film can have a composition that includes at least one selected from among, but not limited to, In₂O₃, SnO₂ and ZnO₂.

In addition, in order to improve the electrical conductivity and optical characteristic of the transparent conductive film, the transparent conductive film can be treated with a dopant, whereby the transparent conductive film can be made of one selected from among indium tin oxide (ITO), F-doped tin oxide (FTO), Al-doped zinc oxide (AZO) and Ga-doped zinc oxide (GZO).

The transparent conductive film can be applied on the substrate at a low temperature (room temperature). In addition, the transparent conductive film can be applied on the substrate via sputtering.

In addition, the step of coating the substrate with the transparent conductive film can be carried out in an oxygen atmosphere. This causes the transparent conductive film to have more oxygen, so that oxygen can diffuse better into the pre-thermochromic thin film at the heat treatment step S300 which will be described later.

Afterwards, at S200, the transparent conductive film is coated with the pre-thermochromic thin film.

The pre-thermochromic thin film can be formed by coating the transparent conductive film with a pure metal material that can form a thermochromic material by bonding with oxygen. Otherwise, the pre-thermochromic thin film can be formed coating the transparent conductive film with a material that is composed of the same elements as of the thermochromic material but has a crystalline phase without thermochromic characteristics. For example, the pre-thermochromic thin film can be made of one of vanadium oxides such as V₂O₃, V₃O₅, V₄O₇, V₆O₁₁, V₅O₉, V₆O₁₃, V₄O₉, V₃O₇, V₂O₅, except for vanadium dioxide (VO₂) that has thermochromic characteristics.

When the thermochromic material has a chemical formula AxBy, the pre-thermochromic material will have a chemical formula AxBz, where z is a metal, y>z, and, preferably, z can be 0.

The pre-thermochromic thin film can be formed on the transparent conductive film via sputtering.

Finally, at S300, the resultant structure in which the substrate, the transparent conductive film and the pre-thermochromic thin film are stacked on each other is heat-treated, thereby manufacturing a thermochromic window.

As the structure in which the substrate, the transparent conductive film and the pre-thermochromic thin film are stacked on each other is heat-treated, oxygen inside the transparent conductive film diffuses into the pre-thermochromic thin film, so that the pre-thermochromic thin film is reformed into a thermochromic thin film.

In this fashion, it is possible to manufacture the thermochromic window having superior thermochromic characteristics by reforming the pre-thermochromic thin film into the thermochromic thin film via heat treatment.

In the related art, when a multilayer structure is coated with a thermochromic thin film, the thermochromic thin film undergoes a phase change during the high-temperature deposition of the thermochromic thin film, whereby the thermochromic thin film loses its thermochromic characteristics. In contrast, the present invention can overcome this problem by manufacturing the thermochromic window by coating the multilayer structure with the pre-thermochromic thin film and reforming the pre-thermochromic thin film into the thermochromic thin film via heat treatment.

In addition, as oxygen diffuses into the pre-thermochromic thin film, the conductivity of the transparent conductive film can be significantly increased due to oxygen vacancies and metal substitution, thereby increasing the emissivity of the thermochromic window further.

The heat treatment step S300 can be conducted in a temperature ranging from 300 to 500 °C in a vacuum atmosphere.

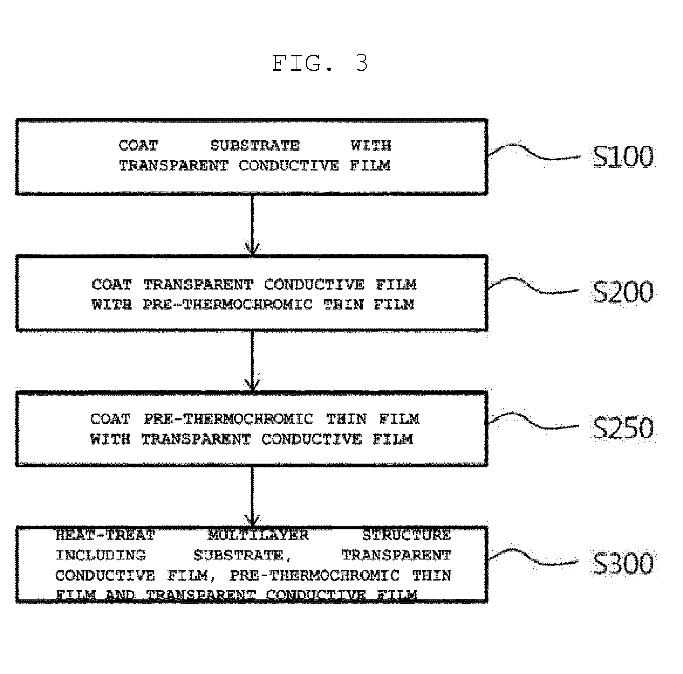

Referring to FIG. 3, a method of manufacturing a thermochromic window according to a second embodiment of the present invention can further include a step S250 of coating the pre-thermochromic thin film with a transparent conductive film after the step S200 of forming the pre-thermochromic thin film and before the heat treatment step S300.

The transparent conductive film formed on the pre-thermochromic thin film not only causes oxygen to diffuse into the pre-thermochromic thin film at the subsequent heat treatment step S300, but also serves to protect the thermochromic thin film from scratches or external pollutants when the thermochromic window is manufactured according to the present invention.

A thermochromic window that is manufactured by the method of manufacturing a thermochromic window according to the present invention as described above has high visible light transmittance and low emissivity.

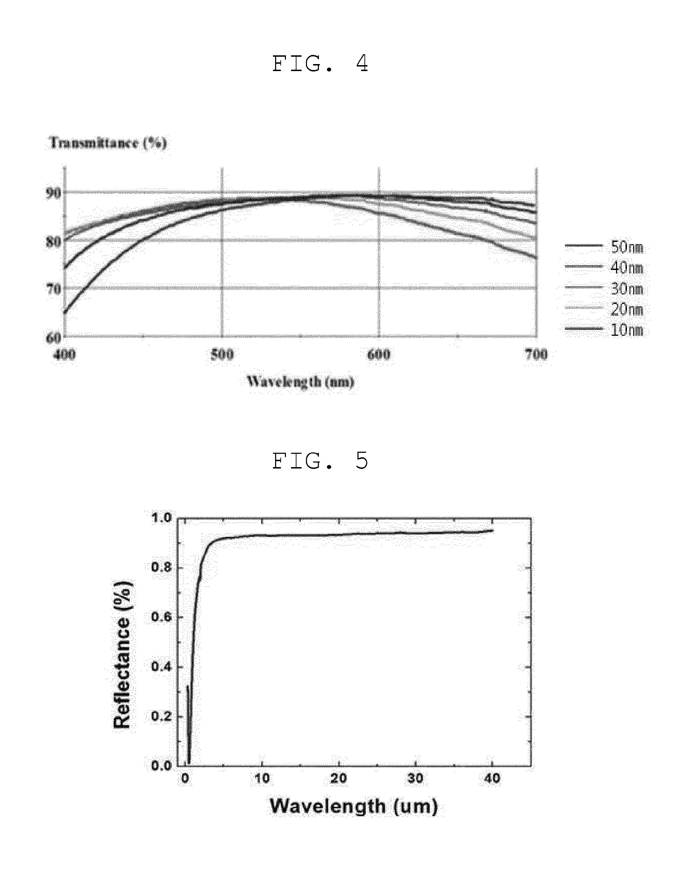

FIG. 4 is a graph showing the visible light transmittance of a thermochromic window that is manufactured according to the second embodiment of the present invention depending on the thickness. In this case, the transparent conductive film is made of indium tin oxide (ITO).

Referring to FIG. 4, it can be understood that the visible light transmittance of the thermochromic window increases with the increasing thickness of the transparent conductive film.

FIG. 5 is a graph showing the reflectance of the thermochromic window that is manufactured according to the second embodiment of the present invention. Here, the transparent conductive film is made of indium tin oxide (ITO), and the thickness of the transparent conductive film is 50 nm.

Referring to FIG. 5, the thermochromic window that is manufactured according to the present invention has a high reflectance. In other words, as the thermochromic window that is manufactured according to the present invention has low emissivity, it has superior insulating characteristics, thereby improving the cooling/heating energy efficiency of a building.

The foregoing descriptions of specific exemplary embodiments of the present invention have been presented with respect to the drawings. They are not intended to be exhaustive or to limit the present invention to the precise forms disclosed, and obviously many modifications and variations are possible for a person having ordinary skill in the art in light of the above teachings.

It is intended therefore that the scope of the present invention not be limited to the foregoing embodiments, but be defined by the Claims appended hereto and their equivalents.

## Claims

1. A method of manufacturing a thermochromic window comprising:
forming (S100) a first transparent conductive film on a substrate;
forming (S200) a pre-thermochromic thin film on the first transparent conductive film; and
heat-treating (S300) a multilayer structure that includes the substrate, the first transparent conductive film and the pre-thermochromic thin film.

2. The method of claim 1, wherein heat-treating (S300) is carried out such that the pre-thermochromic thin film is reformed into a thermochromic thin film.

3. The method according to any of the preceding claims, further comprising forming (S250) a second transparent conductive film on the pre-thermochromic thin film after forming the pre-thermochromic thin film.

4. The method according to any of the preceding claims, wherein heat-treating (S300) is carried out such that the multilayer structure causes oxygen to diffuse from the transparent conductive film into the pre-thermochromic thin film, thereby reforming the pre-thermochromic thin film into the thermochromic thin film.

5. The method according to any of the preceding claims, wherein heat-treating (S300) is carried out such that the pre-thermochromic thin film is completely reformed into the thermochromic thin film.

6. The method according to any of the preceding claims, wherein the thermochromic thin film comprises a thermochromic material AxBy, and the pre-thermochromic thin film comprises a material AxBz, where A is a metal, and B is a chemical element different from A, and wherein x, y and z are natural numbers and y is greater than z.

7. The method of claim 6, wherein z is zero and/or wherein B is oxygen.

8. The method according to any of the preceding claims, wherein forming (S100) the transparent conductive film is carried out in an oxygen atmosphere.

9. The method according to any of the preceding claims, wherein the transparent conductive film and the pre-thermochromic thin film are selected such and heat-treating (S300) is carried out such that the resulting thermochromic thin film comprises one selected from the group consisting of vanadium dioxide (VO₂), titanium (III) oxide (Ti₂O₃) and niobium oxide (NbO₂).

10. The method according to any of the preceding claims, wherein the pre-thermochromic thin film includes pure vanadium metal, and wherein heat-treating (S300) the multilayer structure is carried out such to cause the pure vanadium metal to be phase-changed into vanadium dioxide.

11. The method of claim 10, wherein heat-treating (S300) the multilayer structure is carried out such to cause the complete amount of pure vanadium metal to be completely phase-changed into vanadium dioxide.

12. The method according to any of the preceding claims, wherein the transparent conductive film comprises at least one material selected from the group consisting of indium (III) oxide (In₂O₃), tin dioxide (SnO₂) and zinc peroxide (ZnO₂).

13. The method of claim 12, wherein the transparent conductive film further comprises a dopant.

14. The method according to any of the preceding claims, wherein heat-treating (S300) the multilayer structure is carried out in a temperature ranging from 300 to 500 °C in a vacuum atmosphere.

15. The method according to any of the preceding claims, wherein the transparent conductive film is formed via sputtering.
